# EUROPEAN PATENT APPLICATION

(11) **EP 4 764 291 A1**
(43) Date of publication of application: **24.06.2026**
(21) Application number: 24221743.8
(22) Date of filing: 19.12.2024
(51) Int. Cl.: F16L 55/033

(54) **SILENCER HOUSING COMPONENT, SILENCER, PNEUMATIC SYSTEM OR COMPONENT, COMMERCIAL VEHICLE, AND METHOD OF EXHAUSTING GAS FROM A PNEUMATIC SYSTEM FOR A VEHICLE**

(71) Applicant: ZF CV Systems Europe BV, 1170 Brüssel (BE)
(72) Inventor: Owsiak, Kamil, 50-506 Wroclaw (PL)
(74) Representative: Copi, Joachim

(57) **Abstract**

A silencer housing component (10) for a pneumatic system for a vehicle comprises an outer wall (20) and an end wall (26). The outer wall (20) extends circumferentially around a center axis (13). A plurality (23) of gas outlet passages are formed through the outer wall (20). The end wall (26) comprises a gas directing structure (30). The gas directing structure (30) forms at least one gas flow channel (31, 32) that curves around the center axis (13).

## Description

The invention relates to a silencer configured for installation on a vehicle, such as a commercial vehicle. The invention relates in particular to a silencer housing component configured for use in a pneumatic system of a commercial vehicle or in a pneumatic component of the commercial vehicle.

Pneumatic systems are used on vehicles in a wide variety of applications, including air dryer systems, pneumatic suspension, pneumatic levelling, door actuation systems, and/or braking systems. Silencers are components of pneumatic systems that help reduce noise levels produced by the flow of compressed gas in these systems. Silencers are operative to attenuate or dampen the noise generated by expansion and release of compressed gas. Generally, the function of a silencer is to at least partially absorb and/or dissipate energy of the gas, converting the energy into heat instead of sound.

Silencers in pneumatic systems of vehicles provide various benefits. The benefits include, without limitation, noise reduction, improved compliance with noise pollution regulations, improved working conditions for vehicle operators and/or passengers, and/or enhanced vehicle performance. For illustration, silencers help create a quieter working environment for vehicle operators, reducing the risk of hearing damage and improving overall working conditions. Silencers can also contribute to optimizing the overall performance of the pneumatic system for a vehicle. Overall, silencers in pneumatic systems of vehicles help improve comfort, reduce noise pollution, and optimize the performance of pneumatic systems of vehicles.

DE 10 2009 029968 A1, EP 2 303 659 B1, and DE 10 2008 029489 A1 disclose silencers.

There is a continued need in the art for silencers that are configured to provide a further reduction in noise level during a gas exhaust operation while having a compact configuration as compared to conventional silencers providing the same attenuation level. A further reduction in noise levels is desirable for various reasons, such as ensuring conformity with, or overfulfilling, regulatory noise level limits (e.g., for drivers or passengers). At the same time, construction space and weight of vehicle components continues to be an important issue. This applies in particular in the commercial vehicle sector. By providing a silencer that can attain a desired attenuation level with construction having a same size and/or weight as conventional silencers, benefits can be attained not only with respect to vehicle construction, but also vehicle operation costs. For illustration, more compact and/or more lightweight silencers can contribute to reducing energy consumption for vehicle propulsion (by contributing to a lower overall vehicle weight), which contributes to more environmentally friendly commercial vehicle operation.

Thus, there is a need for an enhanced silencer component configured to provide benefits with respect to the attenuation that is attained for a given silencer size, or that allows the attenuation to be maintained while decreasing the silencer.

It is an object of the invention to provide an improved silencer housing component that provides an effective reduction in noise level during a gas exhaust operation, an improved silencer that provides an effective reduction in noise level, a pneumatic system for a vehicle and/or a pneumatic system component and/or a vehicle comprising such a silencer housing component.

According to aspects of the invention, a silencer housing component, a silencer, a pneumatic system for a vehicle, a pneumatic component for a vehicle, a commercial vehicle, and a method of exhausting gas are disclosed. The dependent claims define preferred embodiments.

According to an aspect, a silencer housing component is provided that is configured for use with a pneumatic component or a pneumatic system for a vehicle. The silencer housing component comprises an outer wall extending circumferentially around a center axis of the silencer housing component, the outer wall comprising a first axial end extending along a first plane and a second axial end extending along a second plane, the first plane and the second plane extending transverse to the center axis. A mounting structure for mounting the silencer housing component is arranged at the first axial end of the outer wall. The silencer housing component comprises an end wall extending from the second axial end of the outer wall towards the center axis along the second plane. Several gas outlet passages are formed through the silencer housing component in at least the outer wall. A gas directing structure is provided on the end wall and/or the outer wall. The gas directing structure forms at least one gas flow channel that curves around the center axis.

Various effects are attained by the silencer housing component. The gas directing structure is configured in such a manner that it forms one or several gas flow channels that curve around the center axis. Thereby, curved gas flow paths are established within a silencer comprising the silencer housing component. This configuration increases a gas flow path length along which gas is forced to flow prior to passing through the gas outlet passages, as compared to a silencer without the gas directing structure and having a same outer wall diameter. Thereby, noise attenuation is improved without requiring an increase in outer wall diameter. Thus, the silencer housing component provides good noise attenuation using a compact construction.

Preferably, the gas directing structure forms a first gas flow channel that curves around the center axis and a second gas flow channel that curves around the center axis.

Thereby, gas can flow away from a center of the silencer housing component towards the several gas outlet passages, e.g., in two opposite directions. A more even distribution of gas outflow towards the gas outlet passages can be attained thereby, contributing to the noise attenuation. The construction also facilitates implementation of the gas directing structure using several delimiting walls that each delimit both the first gas flow channel and the second gas flow channel, thereby providing a simple and weight-efficient construction of the silencer housing component while enhancing the gas flow path length in an efficient manner. Thus, good noise attenuation is attained using a simple, compact, and weight-efficient construction.

Preferably, the first gas flow channel and the second gas flow channel extend in spiral shapes from a radial center of the silencer housing component towards diametrically opposed portions of the outer wall.

Thereby, the gas flow path length in the silencer housing component can be increased in an efficient manner, making good use of the space available within the outer wall. Thus, good noise attenuation is attained using a simple, compact, and weight-efficient construction.

Preferably, the gas directing structure is configured to cause gas to flow in both the first gas flow channel and the second gas flow channel in a same direction around the center axis.

Thereby, the silencer housing component can be implemented in a simple and weight-efficient manner, using delimiting walls that extend in a spiral shape around the center axis. Thus, good noise attenuation is attained using a simple, compact, and weight-efficient construction.

Preferably, the several gas outlet passages comprise a first set of gas outlet passages and a second set of gas outlet passages. The gas directing structure is configured such that the first gas flow channel directs gas to the first set of gas outlet passages but not to the second set of gas outlet passages, and that the second gas flow channel directs gas to the second set of gas outlet passages but not to the first set of gas outlet passages.

Thereby, gas can flow away from a center of the silencer housing component towards the several gas outlet passages in two opposite directions. A more even distribution of gas outflow can be attained thereby, contributing to the noise attenuation. Thus, good noise attenuation is attained using a simple, compact, and weight-efficient construction.

Preferably, the first set of gas outlet passages and the second set of gas outlet passages are separated by outer wall portions of the outer wall in which no gas outlet passages are formed, with the first set of gas outlet passages and the second set of gas outlet passages being arranged symmetrically relative to each other under a 180° rotation around the center axis.

Thereby, gas can flow away from a center of the silencer housing component towards the several gas outlet passages in two opposite directions. A more even distribution of gas outflow can be attained thereby, contributing to the noise attenuation. Thus, good noise attenuation is attained using a simple, compact, and weight-efficient construction.

Preferably, the gas directing structure comprises a delimiting wall that extends transversely to the second plane and that is both an inner passage wall of the first gas flow channel and an outer passage wall of the second gas flow channel.

Thereby, a simple and efficient construction of the silencer housing component is realized while attaining good noise attenuation.

Preferably, the gas directing structure comprises a further delimiting wall that extends transversely to the second plane and that is both an inner passage wall of the second gas flow channel and an outer passage wall of the first gas flow channel.

Thereby, a simple and efficient construction of the silencer housing component is realized while attaining good noise attenuation.

Preferably, the delimiting wall and the further delimiting wall respectively have an upper rim that extends remotely from the second plane, the upper rim having a length that is at least 0.9 times an outer wall diameter of the outer wall; at least 1.0 times the outer wall diameter; at least 1.1 times the outer wall diameter; or at least 1.2 times the outer wall diameter.

Thereby, good noise attenuation can be attained using a compact construction.

Preferably, the further delimiting wall and the delimiting wall are arranged symmetrically under a 180° rotation around the center axis.

Thereby, gas can flow away from a center of the silencer housing component towards the several gas outlet passages in two opposite directions. A more even distribution of gas outflow can be attained thereby, contributing to the noise attenuation. Thus, good noise attenuation is attained using a simple, compact, and weight-efficient construction.

Preferably, the delimiting wall and the further delimiting wall may each be oriented transverse (e.g., perpendicular) to the second plane.

Thereby, the silencer housing component can provide improved noise attenuation with a simple construction.

Preferably, the delimiting wall has an end edge that is parallel to the center axis, and the further delimiting wall has a further end edge that is parallel to the center axis, wherein the end edge and the further end edge are spaced from the center axis by a same spacing.

Thereby, a simple and efficient construction of the silencer housing component is realized while attaining good noise attenuation. An inflow channel to both the first gas flow channel and the second gas flow channel is implemented between the end edge and the further end edge.

Preferably, the delimiting wall and the further delimiting wall are spaced from each other.

Thereby, a simple and efficient construction of the silencer housing component is realized while attaining good noise attenuation.

Preferably, the gas directing structure is configured such that each gas flow channel of the at least one gas flow channel extends through an angle around the center axis that is at least 180°, at least 220°, or at least 260°.

Thereby, the gas flow path length in the silencer housing component can be increased in an efficient manner. Thus, good noise attenuation is attained using a simple, compact, and weight-efficient construction.

Preferably, the gas directing structure is configured such that each of the at least one gas flow channel extends through an angle around the center axis that is at most 540°, at most 450°, or at most 360°.

Thereby, the gas flow path in the silencer housing component can be increased in length in an efficient manner, while using a simple and weight-efficient construction. Thus, good noise attenuation is attained using a simple, compact, and weight-efficient construction.

Preferably, the gas directing structure is configured such that each of the at least one gas flow channel extends through an angle around the center axis that is: at least 180° and at most 540°; at least 220° and at most 450°; or at least 260° and at most 360°.

Thereby, the gas flow path in the silencer housing component can be increased in length in an efficient manner, making good use of the space available within the outer wall, while using a simple and weight-efficient construction. Thus, good noise attenuation is attained using a simple, compact, and weight-efficient construction.

Preferably, the gas directing structure is configured such that each gas flow channel of the at least one gas flow channel has a gas flow channel length of 80 mm or more, of 100 mm or more, or of 120 mm or more.

Thereby, good noise attenuation can be attained.

Preferably, the gas directing structure is configured such that each of the at least one gas flow channel has a tapering width along at least part thereof, wherein the width is measured transversely to the center axis.

Thereby, a cross-section of the at least one gas flow channel decreases towards the gas outlet passages. Thereby, advantage is taken of the fact that gas starts exiting the silencer through the gas outlet passages once the at least one gas flow reaches the gas outlet passages. The taper also facilitates that several gas flow channels can be placed adjacent each other using delimiting walls that respectively form side surfaces of at least two gas flow channels. Thus, good noise attenuation is attained using a simple, compact, and weight-efficient construction.

Preferably, the gas directing structure retains a noise damping mesh material in the at least one gas flow channel.

Thereby, the gas directing structure can serve the dual purpose of increasing the flow path length of gas while mechanically securing the noise damping mesh material.

Preferably, the gas directing structure retains the noise damping mesh material in a friction fit.

Thereby, assembly of noise damping mesh material is facilitated. The silencer housing component provides good noise attenuation using a compact construction that can be efficiently manufactured.

Preferably, the gas directing structure is shaped such that each gas flow channel formed the gas directing structure has a length that is at least 0.9 times an outer wall diameter of the outer wall; at least 1.0 times the outer wall diameter; at least 1.1 times the outer wall diameter; or at least 1.2 times the outer wall diameter.

Thereby, good noise attenuation can be attained using a compact construction.

Preferably, the outer wall, the end wall, and the gas directing structure are formed as a unitary body.

Thereby, the silencer housing component can be manufactured efficiently. The silencer housing component provides good noise attenuation using a compact construction that can be efficiently manufactured.

Preferably, the outer wall, the end wall, and the gas directing structure are formed as a unitary molded body.

Thereby, the silencer housing component can be manufactured efficiently. The silencer housing component provides good noise attenuation using a compact construction that can be efficiently manufactured.

Preferably, the silencer housing component is the silencer housing component for a silencer providing a noise level attenuation during an exhaust operation through the silencer to less than 70 dB(A), or to 67 dB(A) or less.

Thereby, noise pollution can be reduced efficiently, which is desirable for work safety purposes and for reducing noise effects in proximity to commercial vehicles.

According to a further aspect of the invention, there is provided a silencer for a pneumatic system or a pneumatic component for a vehicle. The silencer comprises the silencer housing component of any aspect or embodiment disclosed herein. The silencer comprises a mating housing component comprising a mating engagement structure for engagement with the mounting structure. The silencer comprises a noise damping mesh material configured to be disposed so as to extend into the at least one gas flow channel.

Thereby, a silencer is provided which utilizes the silencer housing component and, thus, attains efficient noise reduction. The silencer is configured such that the gas directing structure contributes to a reduction in noise pollution, with the silencer having a simple and compact construction.

Preferably, the silencer is configured to attenuate noise during an exhaust operation through the silencer to less than 70 dB(A), or to 67 dB(A) or less.

Thereby, noise pollution is reduced efficiently, which is desirable for work safety purposes and for reducing noise effects in proximity to commercial vehicles.

According to a further aspect of the invention, a pneumatic system or a pneumatic component for a vehicle (e.g., for a commercial vehicle) is provided. The pneumatic system or pneumatic component comprises the silencer housing component or the silencer according to any aspect or embodiment disclosed herein.

Thereby, a pneumatic system or pneumatic component is provided that affords good noise attenuation during an exhaust operation using a silencer having a compact and simple construction.

Preferably, the silencer housing component or silencer with the noise dampening mesh material disposed therein is configured to attenuate noise during an exhaust operation through the silencer to less than 70 dB(A), or to 67 dB(A) or less.

Thereby, noise pollution is reduced efficiently, which is desirable for work safety purposes and for reducing noise effects in proximity to commercial vehicles.

Preferably, the pneumatic system or pneumatic component is an air dryer or an air processing unit (APU) for a commercial vehicle.

Thereby, the air dryer or APU affords good noise attenuation during an exhaust operation, using a compact and simple construction.

Preferably, the pneumatic system may comprise any one or any combination of: a supply system for supplying compressed air; a levelling system; a suspension system; a braking system; a pneumatic door actuation system.

Thereby, more efficient noise attenuation is attained for such pneumatic systems.

Preferably, the pneumatic system or pneumatic component may be configured such that noise generated during an exhaust operation is attenuated by to 67 dB(A) or less.

Thereby, noise pollution is reduced efficiently, which is desirable for work safety purposes and for reducing noise effects in proximity to commercial vehicles.

According to a further aspect of the invention, there is provided a pneumatic component for a vehicle. The pneumatic component comprises a vehicle component housing, a valve disposed in the housing, the silencer housing component engaged with a mating engagement structure of the vehicle component housing, and a damping material disposed in a receptacle delimited by the outer wall and the end wall of the silencer housing component.

Thereby, the silencer housing component can be mounted directly on a housing of the pneumatic component that comprises the valve therein. Thus, a compact construction is attained in combination with efficient noise reduction.

Preferably, the vehicle component housing comprises a pneumatic consumer port for fluidly connecting the pneumatic component to at least one pneumatic consumer.

Preferably, the vehicle component housing comprises an exhaust port. Preferably, the silencer housing component is attached to the vehicle component housing at the exhaust port.

Thereby, the silencer housing component can be provided directly on a housing of the pneumatic component so as to reduce noise levels during an exhaust operation.

Preferably, the pneumatic component may comprise a controller and/or other control electronics accommodated in the vehicle component housing and configured to selectively energize the valve.

Thereby, the silencer housing component can be provided directly on a housing of a pneumatic component so as to reduce noise levels during an exhaust operation.

Preferably, the pneumatic component may be an air dryer comprising an air dryer body and an air dryer cartridge configured to be engaged with and disengaged from the air dryer body reversibly in a destruction-free manner.

Thereby, the air dryer affords good noise attenuation during an exhaust operation, using a compact and simple construction.

A commercial vehicle according to an aspect of the invention comprises the silencer housing component, the silencer, or the pneumatic system for a vehicle disclosed herein.

Thereby, a commercial vehicle is provided which utilizes the silencer housing component and, thus, attains efficient noise reduction. The commercial vehicle is configured such that the silencer housing component comprises the gas directing structure that forms one or several gas flow channels curved around the center axis, as discussed herein. Thereby, noise pollution can be suppressed more effectively than with conventional silencer configurations.

According to a further aspect of the invention, a method of exhausting gas from a pneumatic system for a vehicle comprises exhausting the gas through a silencer. The silencer comprises a silencer housing component. The silencer housing component comprises an outer wall extending circumferentially around a center axis of the silencer housing component, the outer wall comprising a first axial end extending along a first plane and a second axial end extending along a second plane, the first plane and the second plane extending transverse to the center axis, wherein a mounting structure for mounting the silencer housing component is arranged at the first axial end of the outer wall. The silencer housing component comprises an end wall extending from the second axial end of the outer wall towards the center axis along the second plane. Several gas outlet passages are formed through the silencer housing component in at least the outer wall. A gas directing structure is provided on the end wall and/or the outer wall. Exhausting the gas comprises directing, by the gas directing structure, the gas along at least one gas flow channel that curves around the center axis.

Various effects are attained by the method of exhausting gas. The gas directing structure causes curved gas flow paths to be established within the silencer housing component. This configuration increases the length along which gas is forced to flow through a noise dampening mesh, as compared to a silencer without the gas directing structure and having a same outer diameter. Thereby, noise attenuation is improved without requiring an increase in outer wall diameter. Thus, the method provides good noise attenuation using a compact construction.

Optional features of the method of exhausting gas and the effects attained thereby correspond to the optional features discussed in association with the silencer housing component, the silencer, the pneumatic component, the pneumatic system for a vehicle, and/or the commercial vehicle.

Preferably, the method may be performed by or using the silencer housing component, the silencer, the pneumatic component, the pneumatic system for a vehicle, and/or the commercial vehicle disclosed herein.

Preferably, the pneumatic system is a pneumatic system of a commercial vehicle, and the method is a method of reducing noise levels to less than 70 dB(A), in particular 67 dB(A) or less, when performing an exhaust operation in which the gas is exhausted through the silencer.

Thereby, noise pollution is reduced efficiently, which is desirable for work safety purposes and for reducing noise effects in proximity to commercial vehicles.

According to a further aspect of the invention, there is provided a method of using the silencer housing component, the silencer, the pneumatic component for a vehicle, the pneumatic system for a vehicle, and/or the method of exhausting gas to establish a gas flow in which gas entering the silencer housing component is directed, by the gas directing structure, along curved gas flow paths around the center axis to limit a noise level during an exhaust operation to 70 dB(A) or less, in particular to 67 dB(A) or less.

Thereby, reduced noise levels are attained using a compact and simple silencer housing configuration.

Various effects and advantages are attained by the silencer housing component, the silencer, the pneumatic component for a vehicle, and the systems and methods disclosed herein. For illustration, the gas directing structure of the silencer housing component is configured to direct a gas flow along curved gas flow paths to the gas outlet passages. Thereby, good noise attenuation is attained while using a simple silencer configuration.

Further embodiments and configurations are defined by the dependent claims. These and other aspects of the invention will be apparent from and further explained with reference to the embodiments described herein with reference to the accompanying drawings, in which:
Fig. 1 is an exploded view of a silencer comprising a silencer housing component according to an embodiment;
Fig. 2 is a perspective view of the silencer housing component;
Fig. 3 is a plan view of the silencer housing component;
Fig. 4 is a further plan view of the silencer housing component;
Fig. 5 is a graph representing a delimiting wall radius as a function of angle;
Fig. 6 is a further graph representing a delimiting wall radius as a function of angle;
Fig. 7 is a schematic representation of a pneumatic system comprising the silencer housing component according to an embodiment;
Fig. 8 is a schematic representation of a component of a pneumatic system for a vehicle comprising the silencer housing component according to an embodiment;
Fig. 9 is a schematic representation of a pneumatic system for a vehicle configured as a gas supply system comprising the silencer housing component according to an embodiment;
Fig. 10 is a schematic representation of a pneumatic system for a vehicle configured as a gas supply system comprising the silencer housing component according to an embodiment;
Fig. 11 is a schematic representation of a pneumatic system for a vehicle configured as a gas supply system comprising the silencer housing component according to an embodiment;
Fig. 12 is a schematic representation of a pneumatic system for a vehicle configured as a pneumatic or electropneumatic braking system comprising the silencer housing component according to an embodiment;
Fig. 13 is a schematic representation of a pneumatic system for a vehicle configured as a levelling system comprising the silencer housing component according to an embodiment;
Fig. 14 is a schematic representation of a pneumatic system for a vehicle configured as a gas spring system comprising the silencer housing component according to an embodiment;
Fig. 15 is a schematic representation of a commercial vehicle;
Fig. 16 is a flow chart of a method of exhausting gas; and
Fig. 17 is a flow chart of a use method.

Embodiments of the invention will be described with reference to the drawings. In the drawings, similar or identical reference signs designate elements with similar or identical configuration and/or function.

The invention relates to silencer housing component. The silencer housing component may be a component defining a receptacle for receiving a noise damping mesh material configured to reduce noise levels upon passage of a gas. The silencer housing component may be configured to be assembled with a further silencer housing component, so as to provide a silencer as a dedicated component, or may be configured to be assembled to a housing of a pneumatic component for a vehicle (such as an air dryer body) at an exhaust port thereof.

As used herein, the term "silencer" refers to a component or assembly which is configured to mitigate noise levels as gas passes through the silencer. The silencer may be configured to reduce noise levels as gas is being exhausted. The silencer may be configured to convert at least part of a kinetic energy of a gas flow into heat (e.g., of a damping material received in the silencer housing component) to contribute to the noise reduction.

As used herein, the term "gas" encompasses a gaseous mixture. The gas may in particular be air, without being limited thereto.

As used herein, the term "pneumatic" component encompasses an electropneumatic component, and the term "pneumatic" system encompasses an electropneumatic system.

As used herein, the term "exhaust" refers to discharging of gas from a pneumatic component or a pneumatic system to ambient atmosphere.

As used herein, the term "flow channel" refers to a structure that is delimited on at least two or at least three of its sides. It is not required, but possible, for the flow channel to have both a bottom and a top wall in addition to a pair of lateral walls that extend along the length of the flow channel.

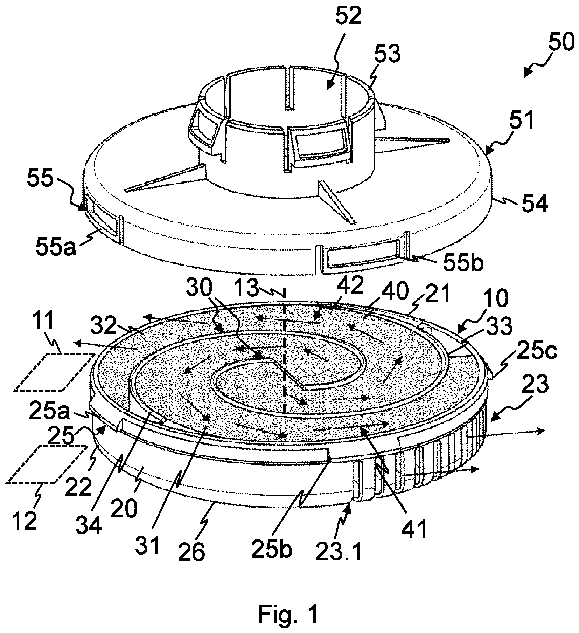

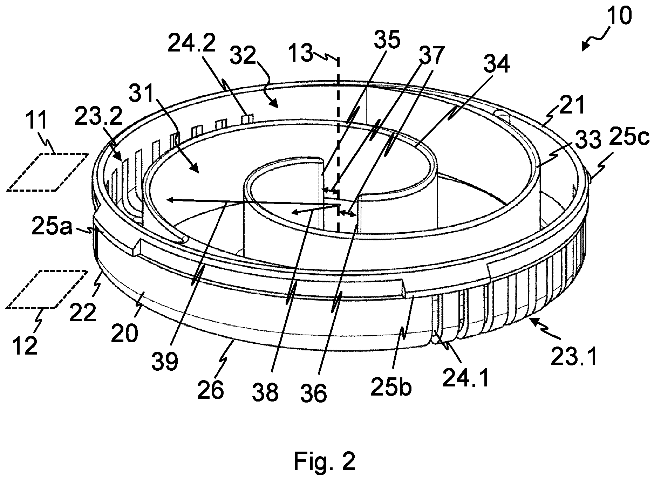

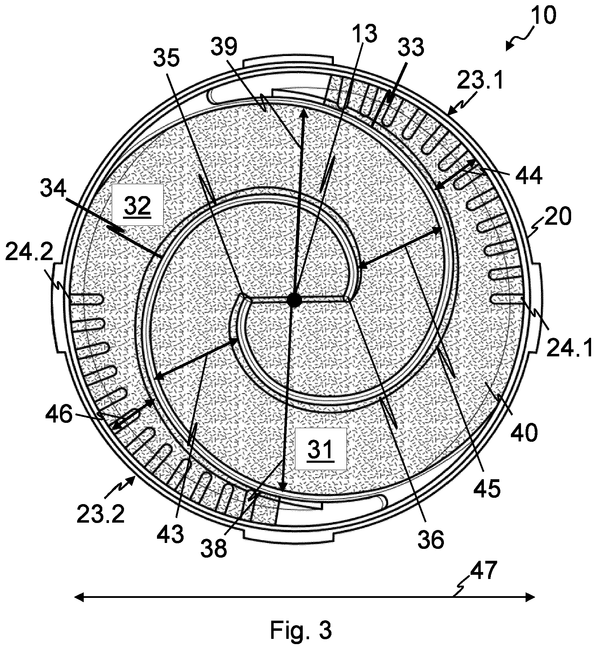

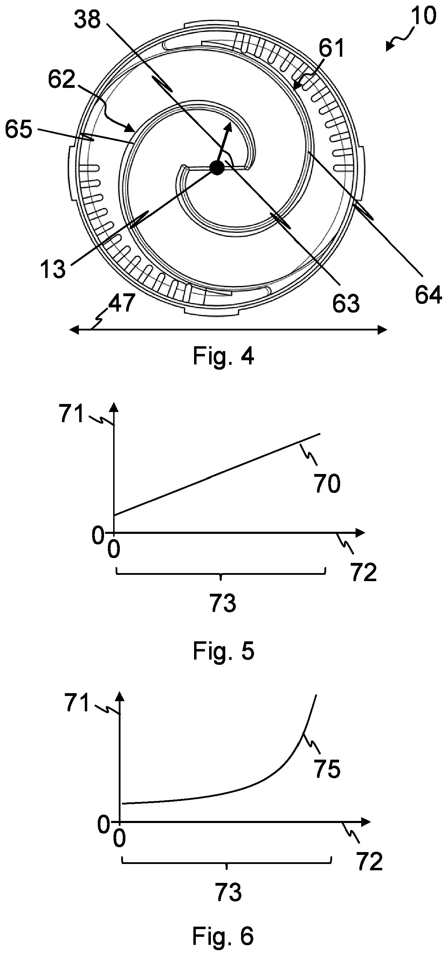

Fig. 1 is a cross-sectional view of a silencer 50 comprising a silencer housing component 10 according to an embodiment of the invention. Fig. 2 is a perspective view of the silencer housing component 10 of Fig. 1, with a noise dampening mesh material 40 being omitted for clarity. Fig. 3 is a plan view of the silencer housing component 10 of Fig. 1. Fig. 4 is a further plan view of the silencer housing component 10, with the noise dampening mesh material 40 being omitted for clarity. The silencer housing component 10 has a center axis 13. The silencer housing component 10 comprises an outer wall 20 and an end wall 30. The outer wall 20 extends circumferentially around the center axis 13. The outer wall 20 may comprise a cylindrical or frustoconical outer wall portion. The outer wall 20 extends along the center axis from a first axial end 21 at a first plane 11 to a second axial end 22 at a second plane 12. The first axial end 21 is an axial end at which a mounting structure 25 for mounting the silencer housing component 10 is provided. The mounting structure 25 may comprise several engagement members 25a, 25b, 25c arranged on the first axial end 21. The first axial end 21 is the axial end at which a gas flow enters the silencer housing component 10. The second axial end 22 is another axial end at which several gas outlet passages 23 is arranged. The several gas outlet passages 23 comprise a first set 23.1 of gas outlet passages and a second set 23.2 of gas outlet passages. The first and second sets 23.1 and 23.2 may be disposed symmetrically relative to each other around a 180° rotation around the center axis 13. The second axial end 22 is the axial end at which the gas flow leaves the silencer housing component 10. The first plane 11 may be a tangential plane to the silencer housing component 10 that is perpendicular to the center axis 13 and is tangential to the first axial end 21 at which a mounting structure 29 is provided. The second plane 12 may be another tangential plane to the silencer housing component 10 that is perpendicular to the center axis 13 and is tangential to the first axial end 21 (at which the mounting structure 25a, 25b, 25c is provided).

The housing component 10 comprises a gas directing structure 30. The gas directing structure forms a first gas flow channel 31 and a second gas flow channel 32. Each of first gas flow channel 31 and the second gas flow channel 32 extends around the center axis in a spiral-type shape. The first gas flow channel 31 and the second gas flow channel 32 may each spiral outward from the center axis in a same rotational sense (e.g., counterclockwise in a viewing direction from the first plane 11 to the second plane 12 along the center axis 13). The first gas flow channel 31 and the second gas flow channel 32 each define a gas flow path length that is at least 0.9, at least 1.0, at least 1.1, or at least 1.2 times an outer wall diameter 47 of the cylindrical outer wall portion of the outer wall 20. The first gas flow channel 31 directs a first gas flow 41 from a center portion proximate the center axis 13 to the first set 23.1 of gas outlet passages. The second gas flow channel 32 directs a second gas flow 42 from the center portion to the second set 23.2 of gas outlet passages.

The gas directing structure 30 comprises a delimiting wall 33 and a further delimiting wall 34. The delimiting wall 33 and the further delimiting wall 34 respectively extend transversely to the second plane 12. The delimiting wall 33 and the further delimiting wall 34 may be arranged symmetrically relative to each other, such that a rotation of the delimiting wall 33 by 180° around the center axis 13 coincides with the further delimiting wall 34 and vice versa. The delimiting wall 33 extends from an end edge 35 that is parallel to the center axis 13 and spaced from the center axis 13 by a spacing 37. The further delimiting wall 34 extends from a further end edge 36 that is parallel to the center axis 13 and spaced from the center axis 13 by the same spacing 37. In a plan view as seen with a viewing direction parallel to the center axis 13 from the first plane 11 towards the second plane 12, the delimiting wall 33 and the further delimiting wall 34 may have a spiral shape 61 and a further spiral shape 62, respectively. A rim 64 of the delimiting wall 33 and a further rim 65 of the further delimiting wall 34, which are the parts of the delimiting wall 33 and the further delimiting wall 34 having maximum spacing from the second plane 12, may each extend parallel to the second plane 12. The rim 64 and the further rim 65 may respectively have a rim length that is at least 0.9, at least 1.0, at least 1.1, or at least 1.2 times the outer wall diameter 47 of the cylindrical outer wall portion of the outer wall 20. A delimiting wall radius 38, measured from the center axis 13 to an inner surface of the delimiting wall 33 in a direction perpendicular to the center axis 13, may be a monotonously increasing (e.g., a strictly monotonously increasing) and continuous function of angle around the center axis 13 to provide the spiral shape 61. A further delimiting wall radius 39, measured from the center axis 13 to an inner surface of the delimiting wall 33 in a direction perpendicular to the center axis 13, may be a monotonously increasing (e.g., a strictly monotonously increasing) and continuous function of angle around the center axis 13 to provide the further spiral shape 62.

The delimiting wall 33 delimits both the first gas flow channel 31 and the second gas flow channel 31. The delimiting wall 33 is a radially inner wall of the first gas flow channel 31 and a radially outer wall of the second gas flow channel 32. The further delimiting wall 34 delimits both the first gas flow channel 31 and the second gas flow channel 31. The further delimiting wall 34 is a radially inner wall of the second gas flow channel 32 and a radially outer wall of the first gas flow channel 31. The delimiting wall 33 and the further delimiting wall 34 may also provide a mesh retention structure and may retain the noise dampening mesh 40 such that it extends through at least a majority of, or all of, the first gas flow channel 31 and the second gas flow channel 32.

To accommodate both the first gas flow channel 31 and the second gas flow channel 32 within the silencer housing component 10, the delimiting wall 33 and the further delimiting wall 34 may be shaped such that the first gas flow channel 31 and the second gas flow channel 32 have a tapering width, i.e., a width that decreases towards the gas outlet passages 23, along at least part of the respective gas flow channel 31, 32. For illustration, the first gas flow channel 31 may have a first channel width 43 closer to the center axis 13 and a further first channel width 44 further away from the center axis 13, with the further first channel width 44 being smaller than the first channel width 43. The second gas flow channel 32 may have a second channel width 45 closer to the center axis 13 and a further second channel width 46 further away from the center axis 13, with the further second channel width 46 being smaller than the second channel width 45. The widths may respectively be measured in a direction perpendicular to the center axis 13. The taper of the first gas flow channel 31 may exist at least along the first set 23.1 of gas outlet passages. The taper of the second gas flow channel 32 may exist at least along the second set 23.2 of gas outlet passages.

The silencer 50 comprises a mating housing component 51. The silencer housing component 10 comprises the mounting structure 25 configured to secure the silencer housing component to the mating housing component 51. The mating housing component 51 comprises a mating engagement structure 55 configured for a destruction-free reversibly releasable engagement with the mounting structure 25. The mating engagement structure 55 may comprise a plurality of mating engagement features 55a, 55b, such as apertures, configured for reversibly releasable engagement with the engagement members 25a, 25b, 25c of the silencer housing component 10. The mating engagement features 55a, 55b may be provided on a rim 54 of the mating housing component 51. The rim 54 may extend along at least a portion of the outer wall 20 and may overlap the portion of the outer wall 20. The silencer 10 comprises the noise damping material mesh 40 arranged in the silencer 10 so as to project into the first gas flow passage 31 and the second gas flow passage 32.

The silencer 50 comprises a gas inlet 52. The gas inlet 52 may be provided at the mating housing component 51. The mating housing component 51 may comprise an attachment flange 53 configured for securing the silencer 50. The attachment flange 53 may be configured to secure the silencer 50 to an exhaust port or an exhaust line. The attachment flange 53 may comprise several flange portions, each separated from adjacent flange portions of the attachment flange by a gap when the attachment flange 53 is in an unbiased position in which a compression band does not exert a radial force onto the attachment flange 53.

In the silencer 50, the gas directing structure 31 of the end wall 30 is configured to direct a gas flow entering the silencer housing component 10 in a center region thereof along the gas flow passages 31, 32 that curve around the center axis 13.

The delimiting wall 33 and the further delimiting wall 34 may respectively extend along a spiral shape 61, 62 around the center axis 13. The spiral shape 61, 62 may be specified by a dependency of the delimiting wall radius 38 on an angle 63 from a reference line. The reference line may be defined by a first gas outlet passage 24.1 in the first set 23.1, a second gas outlet passage 24.2 in the second set 23.2, the end edge 35, and the further end edge 36, which can be arranged in a colinear manner, as shown in Fig. 3.

Fig. 5 is a graph representing how the delimiting wall radius 38 is variable as a function 70 of the angle 63 in the silencer housing component 10. The delimiting wall radius 38 may increase linearly as a function of the angle 63. The function 70 is shown along an angle axis 72 and a radius axis 71. The spiral shape 61, 62 may respectively be configured such that the delimiting wall 33 or the further delimiting wall 34 extend along an angle range 73 that is: at least 180° and at most 540°; at least 220° and at most 450°; or at least 260° and at most 360°. Thus, the end edge 35 and a line at which the delimiting wall 33 abuts on the outer wall 20 may be angularly separated by: at least 180° and at most 540°; at least 220° and at most 450°; or at least 260° and at most 360°. This similarly applies to the further delimiting wall 34.

Fig. 6 is a further graph representing how the delimiting wall radius 38 is variable as a further function 75 of the angle 63 in the silencer housing component 10. The delimiting wall radius 38 may increase non-linearly as a function of the angle 63. In Fig. 6, the further function 75 that represents that delimiting wall radius is shown along the angle axis 72 and the radius axis 71. Also in this case, the spiral shape 61, 62 may respectively be configured such that the delimiting wall 33 or the further delimiting wall 34 extend along an angle range 73 that is: at least 180° and at most 540°; at least 220° and at most 450°; or at least 260° and at most 360°.

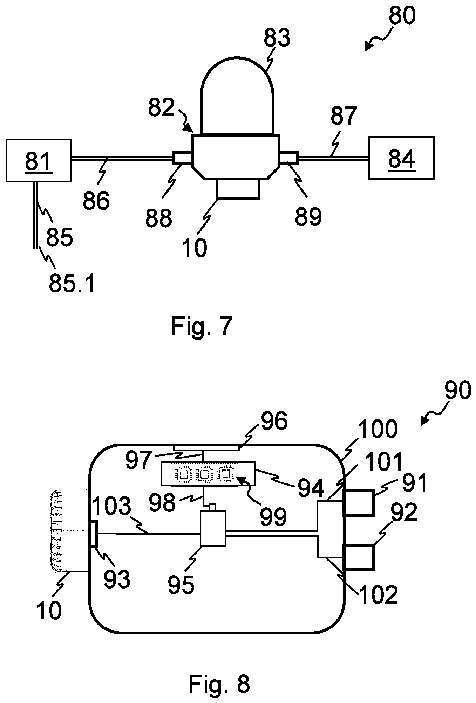

Fig. 7 is a schematic representation of a pneumatic system 80 comprising an air dryer 82, 83. The air dryer 82, 83 comprises an air dryer body 82 and an air dryer cartridge 83. The air dryer body 82 comprises a supply line connector 88, a consumer line connector 89, and an air dryer exhaust port. The silencer housing component 10 is provided at the air dryer exhaust port. The air dryer 82, 83 is configured to communicate the supply line connector 88 with a gas inlet of the air dryer cartridge 83. The air dryer 82, 83 is configured to communicate via another internal conduit of the air dryer body 82 a gas outlet of the air dryer cartridge 83 with the consumer line connector 88. The air dryer 82, 83 is configured to exhaust gas through the exhaust port and the silencer housing component 10 provided at the exhaust port, e.g., during regeneration.

The pneumatic system 80 comprises a compressor 81. The compressor 81 is configured to compress ambient air sucked in via an intake opening 85.1 that may be provided on an intake conduit 85. The intake conduit 85 may be directly connected to the compressor 81. The pneumatic system 80 comprises a supply line 86 directly or indirectly connected to the compressor 81 and the supply line connector 88. The pneumatic system 80 comprises a consumer line 87 directly connected to the consumer line connector 89 and a pneumatic consumer system 84 that comprises one or several pneumatic consumers. The one or several pneumatic consumers may comprise any one or any combination of: an air supply system; a pneumatic levelling system; an electropneumatic levelling system; a pneumatic braking system; an electropneumatic braking system; a parking brake system; a sensor cleaning system; a pneumatic or electropneumatic door actuation system; without being limited thereto.

Fig. 8 shows a pneumatic system component 90. The pneumatic system component 90 is configured for use in a pneumatic system of a vehicle. The pneumatic system component 90 comprises a component housing 100, at least one valve 95 arranged in the housing 100, and a plurality of ports provided on the housing 100 in direct or indirect fluid communication with a valve 95 of the pneumatic system component 90. The plurality of ports comprise at least an exhaust port 93. The silencer housing component 10 is configured for attachment (e.g., an attachment that can be released in a reversible, destruction-free manner) with the component housing 100 at the exhaust port 93, to provide a reduction of noise levels during an exhaust operation. The plurality of ports may comprise a supply port 91 configured to receive pressure gas provided by a gas supply system and/or a discharge port 92 configured for fluid communication (e.g., for bi-directional fluid communication) with at least one pneumatic consumer. The pneumatic system component 90 may comprise a first fluid connection 101 that establishes (direct or indirect) fluid communication of the supply port 91 and a first port of the valve 95. The first fluid connection 101 may be directly connected to the supply port 91 and the first port of the valve 95. The pneumatic system component 90 may comprise a second fluid connection 102 that establishes (direct or indirect) fluid communication of the discharge port 92 and a second port of the valve 95. The second fluid connection 102 may be directly connected to the discharge port 92 and the first port of the valve 95. The pneumatic system component 90 may comprise a third fluid connection 103 that establishes (direct or indirect) fluid communication of the exhaust port 93 and a third port of the valve 95. The third fluid connection 103 may be directly connected to the exhaust port 93 and the third port of the valve 95. The first fluid connection 101, the second fluid connection 102, and the third fluid connection 103 may be integrated within the component housing 100.

The pneumatic system component 90 may be configured as a component for an electropneumatic system. The at least one valve 95 may comprise a solenoid valve or several solenoid valves, and/or one or several mechanical valves. The pneumatic system component 90 may comprise an electric interface 96. The electric interface 96 may be configured for being connected to a control unit, a data bus, or at least one actuation element that can be operated by a vehicle operator. The pneumatic system component 90 may comprise an electronics portion 94 that may be accommodated within the component housing 100 or a dedicated electronics housing attached to the component housing 100. The electronics portion 94 may be configured to selectively energize at least one solenoid valve, responsive to a signal or control data received at the electric interface 96. The electronics portion 94 may comprise one or several circuit(s) 99. The one or several circuit(s) may comprise any one, several, or any combination of: integrated circuits, integrated semiconductor circuits, processors, controllers, application specific integrated circuits (ASICs), field programmable gate arrays (FPGAs), without being limited thereto. The electronics portion 94 may be communicatively coupled with the electric interface 96 via at least one electric connection 97. The electronics portion 94 may be coupled with the solenoid valve(s) 95 via at least one further electric connection 98.

In the pneumatic system component 90, the silencer housing component 10 is configured such that it provides improvements with respect to noise level reduction and construction space and/or weight, as previously explained.

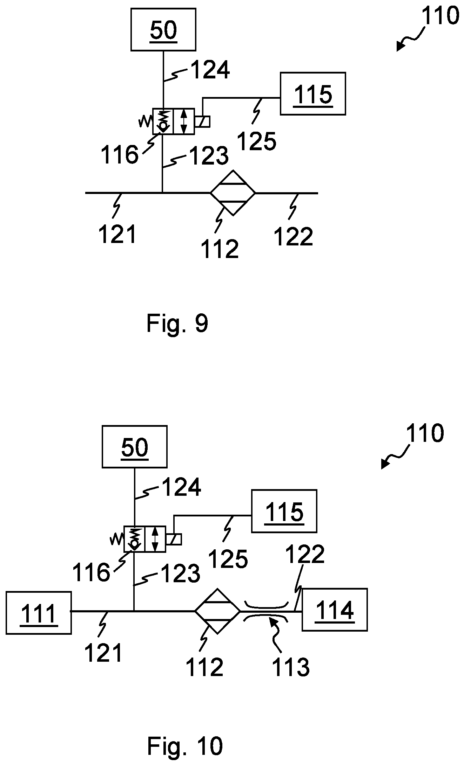

Fig. 9 shows a schematic representation of a pneumatic system 110 for a vehicle. The pneumatic system 110 is configured as a gas supply system. The pneumatic system 110 comprises an air dryer 112. The pneumatic system 110 comprises a supply line 121 directly connected to the air dryer 112 to provide compressed gas to the air dryer 112 and/or transport gas towards at least one exhaust line 123, 124 in an air dryer regeneration operation and/or other exhaust operation. The pneumatic system 110 comprises a pneumatic consumer line 122 directly connected to the air dryer 112 and configured to provide compressed gas to a pneumatic consumer system comprising at least one pneumatic consumer. The pneumatic consumer line 122 may be configured to provide gas from the pneumatic consumer system to the air dryer 112, e.g., to perform a regeneration operation. The pneumatic system 110 comprises the at least one exhaust line 123, 124 configured to exhaust gas, via a silencer 50, to ambient atmosphere. The silencer 50 comprises the silencer housing component 10 according to an embodiment, as disclosed herein. The at least one exhaust line 123, 124 comprises an exhaust line 123 that is directly connected to the supply line 121 and to a control valve 116. The at least one exhaust line 123, 124 comprises a further exhaust line 124 directly connected to the control valve 116 and the gas inlet 52 of the silencer 50. The gas supply system 110 comprises control electronics 115, such as a control device, coupled to the control valve 116 by an electric connection 125. The control electronics 115 is configured to control the control valve 116 to selectively establish fluid communication between the supply line 121 and the silencer 50 and/or to selectively disconnect the silencer 50 from the supply line 121.

Fig. 10 shows a schematic representation of a pneumatic system 110 for a vehicle. The pneumatic system 110 is configured as a gas supply system. Components of Fig. 10 already discussed in association with Fig. 9 are designated with the same reference signs as in Fig. 9. The pneumatic system 110 further comprises a pressure gas source 111. The pressure gas source 111 may comprise a compressor and/or a pressure reservoir. The pressure gas source 111 may comprise an intake for ambient air and may be configured to compress the ambient air to provide pressure gas. The pressure gas source 111 may be connected directly or via at least one valve to the supply line 121. The pneumatic system 110 further comprises a pneumatic consumer system 114. The pneumatic consumer system 114 comprises at least one pneumatic consumer coupled, directly or via at least one fluid circuit component, to the pneumatic consumer line 122. The pneumatic consumer line 122 comprises at least one regeneration valve 113 configured to be activated to selectively perform a regeneration of a desiccant of the air dryer 112. When performing the regeneration, the gas passing from the pneumatic consumer system 114 through the air dryer 112 may be exhausted via the silencer 50 connected to the at least one exhaust line 123, 124.

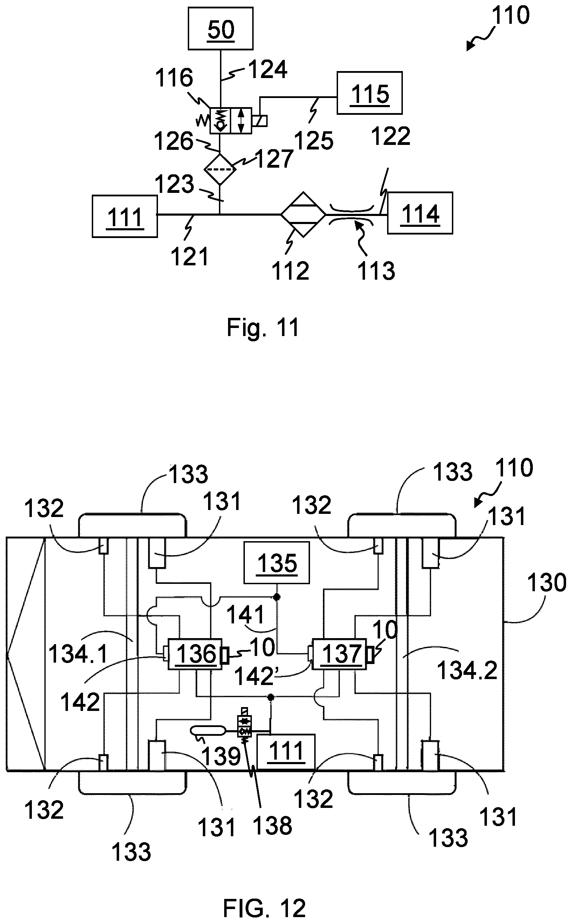

Fig. 11 shows a schematic representation of a pneumatic system 110 for a vehicle. The pneumatic system 110 is configured as a gas supply system. Components already discussed in association with Fig. 9 and/or Fig. 10 are designated with the same reference signs as in Fig. 9 and/or Fig. 10. The pneumatic system 110 further comprises at least one filter 127. The exhaust line 123 is directly connected to a port of the filter 127. The pneumatic system 110 further comprises a filter connection line 126 directly connected to another port of the filter 127 and the control valve 116.

Fig. 12 shows a schematic representation of a vehicle 130 comprising a pneumatic system 110. The pneumatic system 110 may be configured as a braking system, e.g., as an EBS system. The pneumatic system 110 configured as a braking system comprises at least one pneumatic system component, such as a front axle modulator 136 and/or a rear axle modulator 137, which comprises the silencer housing component 10. The vehicle 130 comprises a front axle 134.1 and a rear axle 134.2 or several rear axles. The vehicle 130 comprises several wheel 133. The vehicle 130 comprises one or several sensors, such as wheel speed sensors 132 associated with the several wheels 133. The pneumatic system 110 comprises several brake cylinders 131. The pneumatic system 110 comprises control electronics 135, such as a control unit 135, which is coupled to the front axle modulator 136 and the rear axle modulator 137 via at least one electric connection 141. The front axle modulator 136 comprises an electric interface 142 for communicatively interfacing with the control electronics 135. The rear axle modulator 137 comprises a further electric interface 142' for communicatively interfacing with the control electronics 135. The front axle modulator 136 has at least one discharge port in fluid communication with brake cylinders 131 for front axle wheels. The rear axle modulator 137 has at least one further discharge port in fluid communication with brake cylinders 131 for rear axle wheels. The front axle modulator 136 and/or the rear axle modulator 137 may respectively comprise the silencer housing component 10. The pneumatic system 110 may comprise the fluid supply system of any one of Fig. 9, Fig. 10, and Fig. 11 to provide pressure gas to the modulators 136, 137. The pneumatic system 110 may comprise a supply system that comprises at least the compressor 111 and a pressure reservoir 138, with the pressure reservoir being connected to a supply line for the modulators and an outlet port of the compressor 111 via a control valve 138.

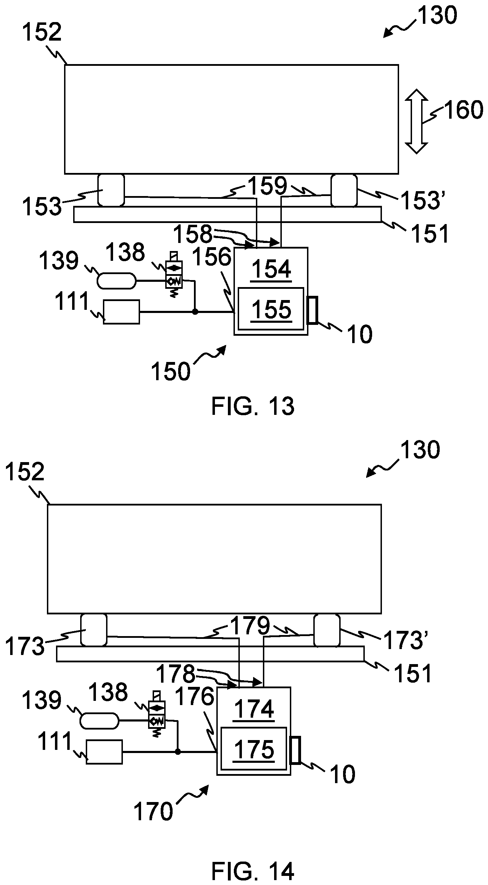

Fig. 13 is a schematic representation of a vehicle 130 which comprises a pneumatic system 150 configured as an electro-pneumatic cabin leveling system. The electro-pneumatic cabin leveling system 150 is configured to change an inclination of a cabin 152 of the vehicle 130 relative to a chassis 151. The pneumatic system 150 comprises at least a pneumatic adjustment element 153 and a further pneumatic adjustment element 153', each of which is configured to change the inclination of the cabin 152. The pneumatic adjustment element 153 and the further pneumatic adjustment element 153' can be configured as inflatable gas bags. The pneumatic system 150 comprises an electropneumatic control device 154. The electropneumatic control device 154 comprises at least two solenoid valves 155 (with the system of at least two solenoid valves being indicated merely schematically in Fig. 13). The electropneumatic control device 154 is arranged to selectively energize the at least two solenoid valves 155 such that compressed air received at a compressed gas inlet 156 is supplied to one or both of the pneumatic adjusting element 153 and the further pneumatic adjusting element 153'. The electropneumatic control device 154 is arranged to selectively energize the at least two solenoid valves 155 such that one or both of the pneumatic adjusting element 153 and the further pneumatic adjusting element 153' is vented via exhaust port of the electropneumatic control device 154. The silencer housing component 10 is arranged at the exhaust port of the electropneumatic control device 154. The electropneumatic control device 154 comprises consumer ports 158, each of which is connected to one of the pneumatic adjusting elements 153, 153' via a connecting line 159. The configuration of the pneumatic system 150 allows different parts of the cabin 152 to be adjusted along an adjustment path 160 in order to adjust the inclination and/or height so that the cabin 152 has a desired attitude relative to a gravity direction. For illustration, the pneumatic system 150 may be configured to allow the cabin 152 to be oriented with its floor perpendicular to a direction of gravity when the chassis 151 is inclined. The solenoid valves 155 can be actuated in a conventional manner, responsive to a mechanical linkage, signals or data received by the electropneumatic control device 154. The pneumatic system 150 may comprise a gas supply system as explained with reference to Fig. 9, Fig. 10, and Fig. 11. The pneumatic system 150 comprises at least a compressor 111 and a gas reservoir 139, with the gas reservoir 139 being connected to the electropneumatic control device 154 via at least one control valve 138.

Fig. 14 is a schematic representation of a vehicle 130 having a pneumatic system 170 configured as an electro-pneumatic shock absorber system. The pneumatic system 170 comprises at least a pneumatic shock absorber 173 and a further pneumatic shock absorber 173', which are each arranged between a chassis 151 and a cab 152. The pneumatic shock absorber 173 and the further pneumatic shock absorber 173' can be configured as gas bags whose pressure is adjustable. The pneumatic system 170 comprises an electropneumatic control device 174. The electropneumatic control device 174 comprises at least one solenoid valve or several solenoid valves 175 (which are shown merely schematically as a block in Fig. 14). The electropneumatic control device 174 is configured to selectively energize the at least one solenoid valve or the several solenoid valves 175 such that compressed gas received at a gas supply port is discharged to the pneumatic shock absorber 173 and the further pneumatic shock absorber 173' and/or that the pneumatic shock absorber 173 and the further pneumatic shock absorber 173' can be vented via an exhaust port of the electropneumatic control device 174. The silencer housing component 10 is arranged at the exhaust port. The electropneumatic control device 174 comprises at least one consumer port 178, which is connected to the pneumatic shock absorber 173 and the further pneumatic shock absorber 173' via at least one connecting line 179. This configuration allows the pressure in the shock absorbers 173, 173' to be controlled using open-loop control and/or closed-loop control. The pneumatic system 170 may comprise a gas supply system as explained with reference to Fig. 9, Fig. 10, and Fig. 11. The pneumatic system 170 comprises at least a compressor 111 and a gas reservoir 139, with the gas reservoir 139 being connected to the electropneumatic control device 154 via at least one control valve 138. The solenoid valves 175 can be actuated in a conventional manner, responsive to a mechanical linkage, signals or data received by the electropneumatic control device 174.

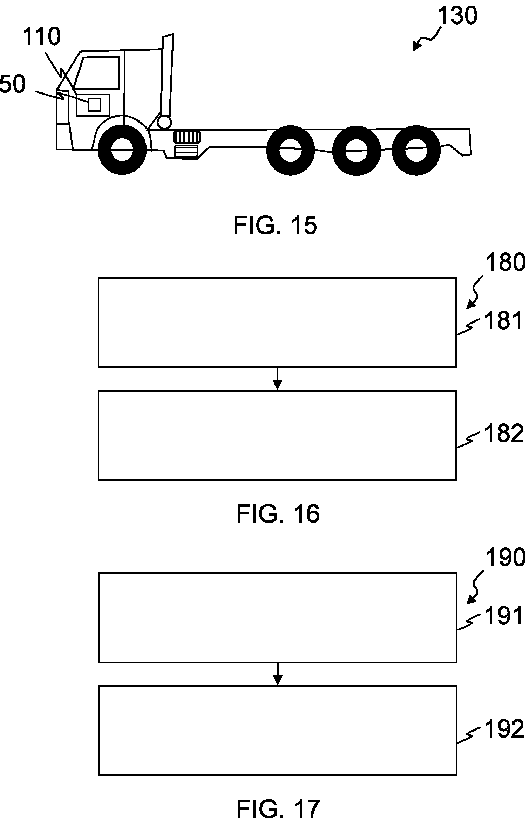

Fig. 15 shows a schematic representation of a vehicle configured as a commercial vehicle 130. The commercial vehicle 130 comprises at least one pneumatic system 110 comprising the silencer 50 and/or the silencer housing component 10. The pneumatic system 110 may comprise any one or any combination of a supply system for supplying compressed air; a levelling system; a suspension system; a braking system; a door actuation system.

Fig. 16 is a flow chart of a method 180 of exhausting gas from a pneumatic system 80, 110, 150, 170 for a vehicle 130. The method 180 may be performed automatically by or using the pneumatic system 110, 130, 150, 170 comprising at least one silencer housing component 10 according to an embodiment.

The method 180 comprises a process block 181 of establishing, via at least one valve, fluid communication between at least one component of the pneumatic system and an exhaust port. The exhaust port is a port at which the silencer housing component 10 is provided or with which the silencer 50 comprising the silencer housing component 10 is directly or indirectly connected.

The method 180 further comprises a process block 182 of directing, by the silencer housing component 10, the gas flow through the several gas outlet passages 29. Directing the gas flow may comprise directing the gas flow, by the gas directing structure 30, along the at least one gas flow channel 31, 32 that curves around the center axis 13.

Fig. 17 is a flow chart of a use method 190 of using the silencer housing component 10, the silencer 50, the pneumatic component, the pneumatic system, the commercial vehicle or the exhaust method according to an embodiment.

The use method 190 comprises a process block 191 of operating a pneumatic system of a commercial vehicle, with the commercial vehicle comprising the silencer housing component 10. The silencer housing component comprises the gas directing structure 30.

The use method comprises a process block 192 of performing an exhaust operation, in which the silencer housing component 10 causes the noise level during an exhaust operation to be attenuated to less than 70 dB(A), or to 67 dB(A) or less.

While embodiments have been described with reference to the drawings, modifications and alterations may be implemented in other embodiments.

For illustration, while embodiments have been described in which the gas directing structure forms two spiral-shaped gas flow channels, a greater number or only one spiral-shaped gas flow channel may be provided. While embodiments have been described in which the gas directing structure comprises a delimiting wall and a further delimiting wall that are rotationally symmetrical to each other, other configurations may be realized.

For further illustration, the invention may be applied to a variety of pneumatic systems, including gas supply systems configured to perform an air dryer regeneration, without being limited thereto.

Various effects and advantages are attained by embodiments of the invention. Embodiments provide improved noise reduction characteristics. This facilitates compliance with regulatory noise pollution requirements, enhances vehicle operator safety and/or comfort, and improves passenger comfort.

### List of Reference Numerals (part of the description)

- 10: silencer housing component
- 11: first plane
- 12: second plane
- 13: center axis
- 20: outer wall
- 21: first axial end
- 22: second axial end
- 23: several gas outlet passages
- 23.1: first set of gas outlet passages
- 23.2: second set of gas outlet passages
- 24.1: first gas outlet passage
- 24.2: second gas outlet passage
- 25: mounting structure
- 25a, 25b, 25c: engagement member
- 26: end wall
- 27: diameter
- 30: gas directing structure
- 31: first gas flow channel
- 32: second gas flow channel
- 33: delimiting wall
- 34: further delimiting wall
- 35: end edge
- 36: further end edge
- 37: spacing
- 38: delimiting wall radius
- 39: further delimiting wall radius
- 40: noise dampening mesh material
- 41: first gas flow
- 42: second gas flow
- 43: first channel width
- 44: further first channel width
- 45: second channel width
- 46: further second channel width
- 47: outer diameter
- 50: silencer
- 51: mating housing component
- 52: gas inlet
- 53: attachment flange
- 54: rim
- 55: mating engagement structure
- 55a, 55b: mating engagement member
- 61: spiral shape
- 62: further spiral shape
- 63: angle
- 64: rim
- 65: further rim
- 70: radius of spiral shape
- 71: angle axis
- 72: radius axis
- 73: angle range
- 75: radius of spiral shape
- 76: angle axis
- 77: radius axis
- 78: angle range
- 80: pneumatic system
- 81: compressor
- 82: air dryer body
- 83: air dryer cartridge
- 84: pneumatic consumer system
- 85: intake conduit
- 85.1: intake opening
- 86: supply line
- 87: consumer line
- 88: supply line connector
- 89: consumer line connector
- 90: pneumatic system component
- 91: supply port
- 92: discharge port
- 93: exhaust port
- 94: electronics portion
- 95: solenoid valve
- 96: electric interface
- 97: electric connection
- 98: further electric connection
- 99: circuit(s)
- 101: first fluid connection
- 102: second fluid connection
- 103: third fluid connection
- 110: pneumatic system for a vehicle
- 111: pressure gas source
- 112: air dryer
- 113: regeneration valve
- 114: pneumatic consumer system
- 115: control electronics
- 116: control valve
- 121: supply line
- 122: pneumatic consumer line
- 123: exhaust line
- 124: further exhaust line
- 125: electric connection
- 126: filter connection line
- 127: filter
- 130: vehicle
- 131: brake cylinder
- 132: wheel speed sensor
- 133: wheel
- 134.1: front axle
- 134.2: rear axle
- 135: control electronics
- 136: front axle modulator
- 137: rear axle modulator
- 138: control valve
- 139: pressure reservoir
- 141: electric line
- 142: electric interface
- 150: electropneumatic levelling system
- 151: chassis
- 152: cabin
- 153: adjustment member
- 153': further adjustment member
- 154: electropneumatic control device
- 155: solenoid valve(s)
- 156: supply port
- 158: discharge port(s)
- 159: pneumatic consumer lines
- 160: levelling adjustment path
- 170: electropneumatic shock absorbing system
- 173: pneumatic shock absorber
- 173': further pneumatic shock absorber
- 174: electropneumatic control device
- 175: solenoid valve(s)
- 176: supply port
- 178: discharge port(s)
- 179: pneumatic consumer lines
- 180: method
- 181, 182: process blocks
- 190: method
- 191, 192: process blocks

## Claims

1. A silencer housing component (10) for a pneumatic component (82, 83; 90) or a pneumatic system (80; 110) for a vehicle (130), the silencer housing component (10) comprising:
an outer wall (20) extending circumferentially around a center axis (13) of the silencer housing component (10), the outer wall (20) comprising a first axial end (21) extending along a first plane (11) and a second axial end (22) extending along a second plane (12), the first plane (11) and the second plane (12) extending transverse to the center axis (13), wherein a mounting structure (25) for mounting the silencer housing component (10) is arranged at the first axial end (21) of the outer wall (20); and
an end wall (26) extending from the second axial end (22) of the outer wall (20) towards the center axis (13) along the second plane (12);
wherein several gas outlet passages (23) are formed through the silencer housing component (10) in at least the outer wall (20); and
wherein a gas directing structure (30) is provided on the end wall (26) and/or the outer wall (20), the gas directing structure (30) forming at least one gas flow channel (31, 32) that curves around the center axis (13).

2. The silencer housing component (10) of claim 1, wherein the gas directing structure (30) forms a first gas flow channel (31) that curves around the center axis (13) and a second gas flow channel (32) that curves around the center axis (13).

3. The silencer housing component (10) of claim 2, wherein the first gas flow channel (31) and the second gas flow channel (32) extend in spiral shapes from a radial center of the silencer housing component (10) towards diametrically opposed portions of the outer wall (20).

4. The silencer housing component (10) of claim 3, wherein the gas directing structure (30) is configured to cause gas to flow in both the first gas flow channel (31) and the second gas flow channel (32) in a same direction around the center axis (13).

5. The silencer housing component (10) of any one of claims 2 to 4, wherein the gas directing structure (30) comprises a delimiting wall (33) that extends transversely to the second plane (12) and that is both an inner passage wall of the first gas flow channel (31) and an outer passage wall of the second gas flow channel (32).

6. The silencer housing component (10) of claim 5, wherein the gas directing structure (30) comprises a further delimiting wall (34) that extends transversely to the second plane (12) and that is both an inner passage wall of the second gas flow channel (32) and an outer passage wall of the first gas flow channel (31).

7. The silencer housing component (10) of claim 6, wherein the delimiting wall (33) has an end edge (35) that is parallel to the center axis (13), and wherein the further delimiting wall (34) has a further end edge (36) that is parallel to the center axis (13), wherein the end edge (35) and the further end edge (36) are spaced from the center axis (13) by a same spacing (37).

8. The silencer housing component (10) of any one of the preceding claims, wherein the gas directing structure (30) is configured such that each gas flow channel (31, 32) of the at least one gas flow channel (31, 32) extends through an angle (73) around the center axis (13) that is at least 180°, at least 220°, or at least 260°.

9. The silencer housing component (10) of any one of the preceding claims, wherein the gas directing structure (30) is configured such that each of the at least one gas flow channel (31, 32) has a tapering width (43, 44, 45, 46) along at least part thereof.

10. The silencer housing component (10) of any one of the preceding claims, wherein the gas directing structure (30) retains a noise damping mesh material (40) in the at least one gas flow channel (31, 32).

11. The silencer housing component (10) of any one of the preceding claims, wherein the outer wall (20), the end wall (26), and the gas directing structure (30) are formed as a unitary molded body.

12. A silencer (50) for a pneumatic system (80; 110; 150; 170) or a pneumatic component (82, 83; 90) for a vehicle (130), comprising:
the silencer housing component (10) of any one of the preceding claims;
a mating housing component (51; 100) comprising a mating engagement structure (55) for engagement with the mounting structure (25); and
a noise damping mesh material (40) configured to be disposed so as to extend into the at least one gas flow channel (31, 32).

13. A pneumatic system (80; 110; 150; 170) or a pneumatic component (82, 83; 90) for a vehicle (130), comprising the silencer housing component (10) of any one of claims 1 to 11 or the silencer of claim 12.

14. A commercial vehicle (130), comprising the silencer housing component (10) of any one of claims 1 to 11, the silencer (50) of claim 12, the pneumatic system (80; 110; 150; 170) of claim 13, or the pneumatic component (82, 83; 90) of claim 13.

15. A method of exhausting gas (41, 42) from a pneumatic system (80; 110) of a vehicle (130), the method comprising:
exhausting the gas through a silencer (50) of the pneumatic system (80; 110), the silencer (50) comprising a silencer housing component (10), the silencer housing component (10) comprising an outer wall (20) extending circumferentially around a center axis (13) of the silencer housing component (10), the outer wall (20) comprising a first axial end (21) extending along a first plane (11) and a second axial end (22) extending along a second plane (12), the first plane (11) and the second plane (12) extending transverse to the center axis (13), the silencer housing component (10) further comprising an end wall (26) that extends from the second axial end (22) of the outer wall (20), wherein several gas outlet passages (23) are formed through the silencer housing component (10) in at least the outer wall (20),
wherein a gas directing structure (30) is provided on the end wall (26) and/or the outer wall (20); and
wherein exhausting the gas (41, 42) comprises directing, by the gas directing structure (30), the gas (41, 42) along at least one gas flow channel (31, 32) that curves around the center axis (13).
